# EUROPEAN PATENT APPLICATION

(11) **EP 3 178 348 A1**
(43) Date of publication of application: **14.06.2017**
(21) Application number: 16200464.2
(22) Date of filing: 24.11.2016
(51) Int. Cl.: A45D 20/12, A45D 20/10

(54) **A HANDHELD APPLIANCE**

(30) Priority: 09.12.2015 GB 201521694
(71) Applicant: Dyson Technology Limited, Malmesbury Wiltshire SN16 0RP (GB)
(72) Inventor: LAVENI, Pierpaolo, Malmesbury, Wiltshire SN16 0RP (GB); RE, Renzo, Malmesbury, Wiltshire SN16 0RP (GB); HEWITT, James, Malmesbury, Wiltshire SN16 0RP (GB); COULTON, Robert, Malmesbury, Wiltshire SN16 0RP (GB)
(74) Representative: Fowler, Maria Jayne

(57) **Abstract**

Disclosed is a hair care appliance comprising a body, a fluid flow path extending from a fluid inlet into the appliance to a fluid outlet from the body, a heater for heating fluid in the fluid flow path, a pre-heater located upstream of the heater and a thermal safety device positioned between the pre-heater and the heater. The pre-heater may comprise a resistive element. The pre-heater may be electrically connected to the heater via a heater circuit. The thermal safety device may be electrically connected to the heater via the heater circuit. When the appliance is activated, fluid may flow from the fluid inlet through the pre-heater, past the thermal safety device, through the heater and on to the fluid outlet. The thermal safety device may extend orthogonal to a longitudinal axis A-A of the body.

## Description

This invention relates to a handheld appliance and in particular a hair care appliance such as a hairdryer,

Generally, a motor and fan are provided which draw fluid into a body; the fluid may be heated prior to exiting the body. The motor is susceptible to damage from foreign objects such as dirt or hair so conventionally a filter is provided at the fluid inlet to the blower. The fan and heater require power in order to function and this is provided via internal wiring from either a mains power cable or batteries attached to the appliance.

Conventional hairdryers have control buttons which can change one or more of the flow rate and the temperature of the fluid that exits the hairdryer. However, if the flow rate is increased there is usually a drop in the temperature of the fluid that exits the hairdryer that can be perceived by the user.

The temperature of the fluid that exits the hairdryer is also affected by other factors. There can be an electrical failure of some sort; alternatively dust and dirt can be pulled into the heater element and if this builds up it can burn and cause an increase in the temperature of the fluid exiting the hairdryer. Obviously, thermal protection is provided in the form of thermal cut outs such as thermal fuses or bi-metallic strips to prevent an excessive increase in temperature but such protection renders the hairdryer inoperable either temporarily or permanently.

A bi-metallic strip is a temporary thermal cut out and is only effective if it is positioned within the fluid flow path in heated fluid. It is known to position such as safety device downstream of the heater, such as is disclosed in Japanese Patent Application 60-78826. One problem with this is that it causes the length of the product to be increased in order to house the safety device.

Other solutions have been to either place the safety device within the windings of the heater, as is disclosed in Italian Patent Number 255589 however this adds to the complexity of manufacture of the heater or, to position the bi-metallic strip radially external to the heater however, this requires the diameter of the housing to be increased to accommodate the safety device.

The invention provides an alternative solution that does not cause the size of the product to be increased and does not require a local modification of the heater element windings to accommodate the thermal safety device.

According to a first aspect, the invention provides a hair care appliance comprising a body, a fluid flow path extending from a fluid inlet into the appliance to a fluid outlet from the body, a heater for heating fluid in the fluid flow path, a pre-heater located upstream of the heater and a thermal safety device positioned between the pre-heater and the heater.

The pre-heater mimics or simulates the temperature of the heater for the bi-metallic strip. Thus, even though fluid that is heated by the heater does not flow around and over the bi-metallic strip, the bi-metallic strip experiences an imitation or simile of the fluid heated by the heater by the pre-heater.

Preferably, the pre-heater comprises a resistive element.

In a preferred embodiment, the pre-heater is electrically connected to the heater via a heater circuit.

Preferably, the thermal safety device is electrically connected to the heater via the heater circuit.

In one embodiment, the thermal safety device is positioned before the heater within the heater circuit thus, if the thermal safety device is activated, current does not reach the heater. The thermal safety device is positioned between the heater and the on/off switch.

The per-heater may also be located before the heater within the heater circuit. It is preferred that the pre-heater is between the thermal safety device and the heater. Thus, if there is a blockage at the primary fluid inlet, the pre-heater being upstream of the heater will respond to the reduced flow before the heater, causing the thermal safety device to trip or activate before the heater causes any significant rise in temperature within the appliance.

In a preferred embodiment, when the appliance is activated, fluid flows from the fluid inlet through the pre-heater, past the thermal safety device, through the heater and on to the fluid outlet. Thus, the pre-heater will respond to a reduced flow within the primary fluid flow path before the heater, causing the thermal safety device to trip or activate before the heater causes any significant rise in temperature within the appliance.

Preferably, the body has a first end, a second end and a longitudinal axis A-A extending from the first end to the second end, wherein the fluid flow path extends along the longitudinal axis A-A.

In a preferred embodiment, the thermal safety device extends orthogonal to the longitudinal axis A-A of the body. This is advantageous as it maximises the exposure of the thermal safety device to the fluid flowing through the primary fluid flow path. Were the thermal safety device positioned along the primary fluid flow path a small volume of the fluid flowing would pass near the thermal safety device, by positioning it across the flow a larger arc of the fluid flowing passes directly over the thermal safety device.

Preferably, the pre-heater extends orthogonal to the longitudinal axis A-A of the body.

In a preferred embodiment, the pre-heater extends across the length of the thermal safety device. This maximises the effectiveness of this safety feature.

Preferably, the heater comprises a heater element and a wall extending around the periphery of the heater element.

In a preferred embodiment, the wall additionally extends around the periphery of the pre-heater.

Preferably, the appliance is a hairdryer.

The invention will now be described, by way of example only, with reference to the accompanying drawings, in which:
Figure 1 shows a hairdryer in which a thermistor according to the invention may be used;
Figure 2 shows a cross section through the hairdryer of Figure 1;
Figure 3 shows an isometric view of a heater assembly according to the invention;
Figure 4a shows a further isometric view of the heater assembly of Figure 3;
Figure 4b shows an exploded isometric view of the pre-heater of Figure 4a;
Figure 5 shows a top view of the heater assembly of Figure 3; and
Figure 6 shows schematically parts of the heater circuit.

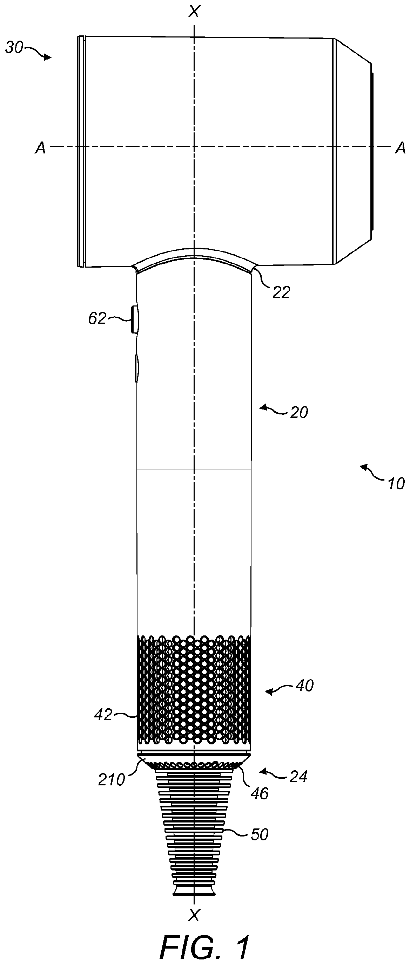

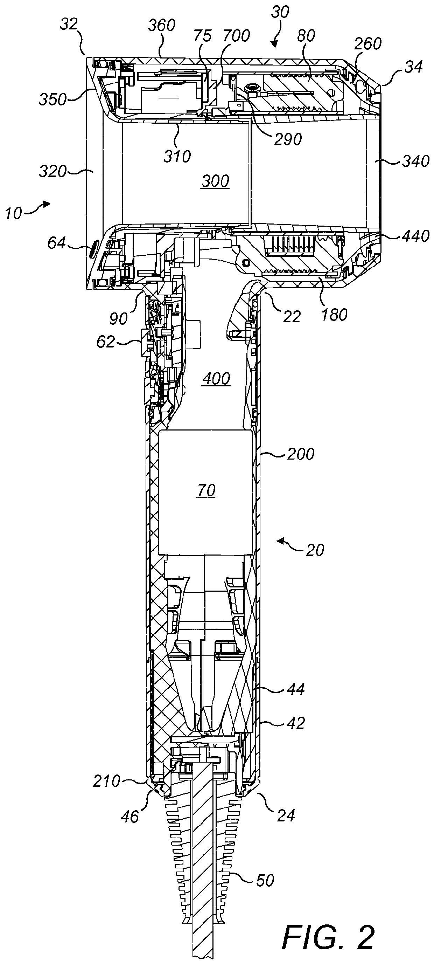

Figures 1 and 2 show an example of hairdryer 10 with a handle 20 and a body 30 suitable for use with a thermistor according to the invention . The handle has a first end 22 which is connected to the body 30 and a second end 24 distal from the body 30 and which includes a primary fluid inlet 40. Power is supplied to the hairdryer 10 via a cable 50. At a distal end of the cable 50 from the hairdryer 10 a plug (not shown) is provided, the plug may provide electrical connection to mains power or to a battery pack for example.

The handle 20 has an outer wall 200 which extends from the body 30 towards a distal end 24 of the handle. At the distal end 24 of the handle an end wall 210 extends across the outer wall 200. The cable 50 enters the hairdryer through this end wall 210. The primary fluid inlet 40 in the handle 20 includes first apertures that extend around and along 42 the outer wall 200 of the handle in a series of rows and/or columns that extend from the distal end 24 of the handle 20 and second apertures that extend across 46 and through the end wall 210 of the handle 20. The first and second apertures form an initial filter for the primary fluid inlet and help to prevent hair and other foreign objects from entering. Ideally, a second finer filter 44 is provided. The cable 50 is located approximately in the middle of the end wall 210 so extends from the centre of the handle 20. The handle 20 has a longitudinal axis X-X along which the outer wall 200 extends from the body 30 towards the distal end 24.

Upstream of the primary fluid inlet 40, a fan unit 70 is provided. The fan unit 70 includes a fan and a motor. The fan unit 70 draws fluid through the primary fluid inlet 40 towards the body 30 through a primary fluid flow path 400 that extends from the primary fluid inlet 40 and into the body 30 where the handle 20 and the body 30 are joined 90. The body 30 has a first end 32 and a second end 34, the primary fluid flow path 400 continues through the body 30 towards the second end 34 of the body, around a heater 80 and to a primary fluid outlet 440 where fluid that is drawn in by the fan unit exits the primary fluid flow path 400. The primary fluid flow path 400 is non linear and flows through the handle 20 in a first direction and through the body 30 in a second direction which is orthogonal to the first direction.

The body 30 includes an outer wall 360 and an inner duct 310. The primary fluid flow path 400 extends along the body from the junction 90 of the handle 20 and the body 30 between the outer wall 360 and the inner duct 310 towards the primary fluid outlet 440 at the second end 34 of the body 30.

An inner wall 260 extends within the outer wall 360. The inner wall 260 at least partially defines the primary fluid outlet 440 and extends from the second end 34 of the body 30 between the inner duct 310 and the outer wall 360.

Another fluid flow path is provided within the body; this flow is not directly processed by the fan unit or the heater but is drawn into the hairdryer by the action of the fan unit producing the primary flow through the hairdryer. This fluid flow is entrained into the hairdryer by the fluid flowing through the primary fluid flow path 400.

The first end 32 of the body includes a fluid inlet 320 and the second end 34 of the body includes a fluid outlet 340. Both the fluid inlet 320 and the fluid outlet 340 are at least partially defined by the inner duct 310 which is an inner wall of the body 30 and extends within and along the body. A fluid flow path 300 extends within the inner duct 310 from the fluid inlet 320 to the fluid outlet 340. At the first end 32 of the body 30, a side wall 350 extends between the outer wall 360 and the inner duct 310. This side wall 350 at least partially defines the fluid inlet 320. The primary fluid outlet 440 is annular and surrounds the fluid flow path.

A PCB 75 including the control electronics for the hairdryer is located in the body 30 near the side wall 350 and fluid inlet 320. The PCB 75 is ring shaped and extends round the inner duct 310 between the inner duct 310 and the outer wall 360. The PCB 75 is in fluid communication with the primary fluid flow path 400. The PCB 75 extends about the fluid flow path 300 and is isolated from the fluid flow path 300 by the inner duct 310.

The PCB 75 controls parameters such as the temperature of the heater 80 and the speed of rotation of the fan unit 70. Internal wiring (not shown) electrically connects the PCB 75 to the heater 80 and the fan unit 70 and the cable 50. Control buttons 62, 64 are provided and connected to the PCB 75 to enable a user to select from a range of temperature settings and flow rates for example.

Downstream of the PCB 75, is the heater 80 and a PCB baffle 700 is provided between the PCB 75 and the heater 80. The PCB baffle provides thermal protection for the PCB 75 when the heater 80 switched on amongst other things.

In use, fluid is drawn into the primary fluid flow path 400 by the action of the fan unit 70, is optionally heated by the heater 80 and exits from the primary fluid outlet 440. This processed flow causes fluid to be entrained into the fluid flow path 300 at the fluid inlet 320. The fluid combines with the processed flow at the second end 34 of the body. In the example shown in Figure 2, the processed flow exits the primary fluid outlet 440 and the hairdryer as an annular flow which surrounds the entrained flow that exits from the hairdryer via the fluid outlet 340. Thus fluid that is processed by the fan unit and heater is augmented by the entrained flow.

The body 30 is generally symmetrical about a longitudinal axis A-A which extends along the length of the body 30. The duct 310 and outer wall 360 are concentric as is the heater 80 located between the duct 310 and the outer wall 360.

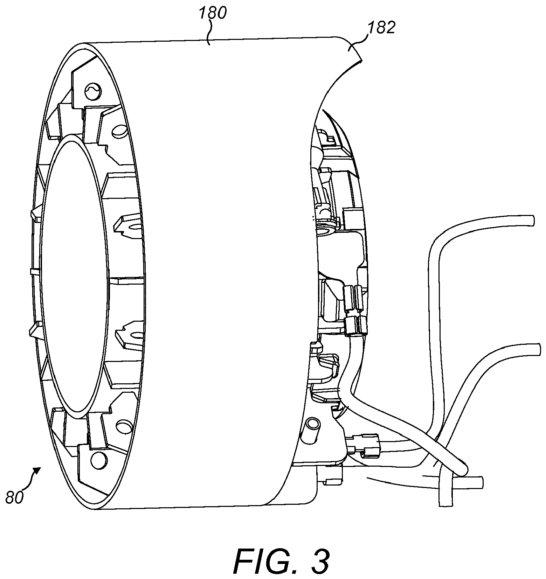

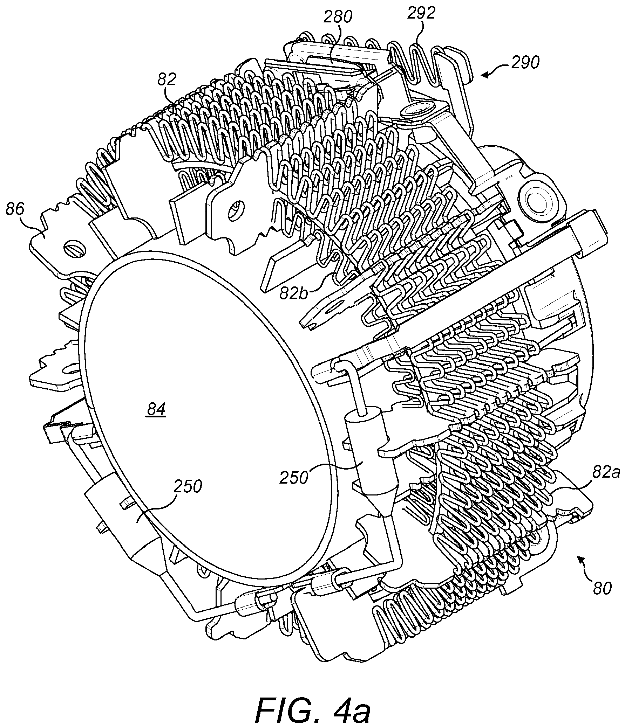

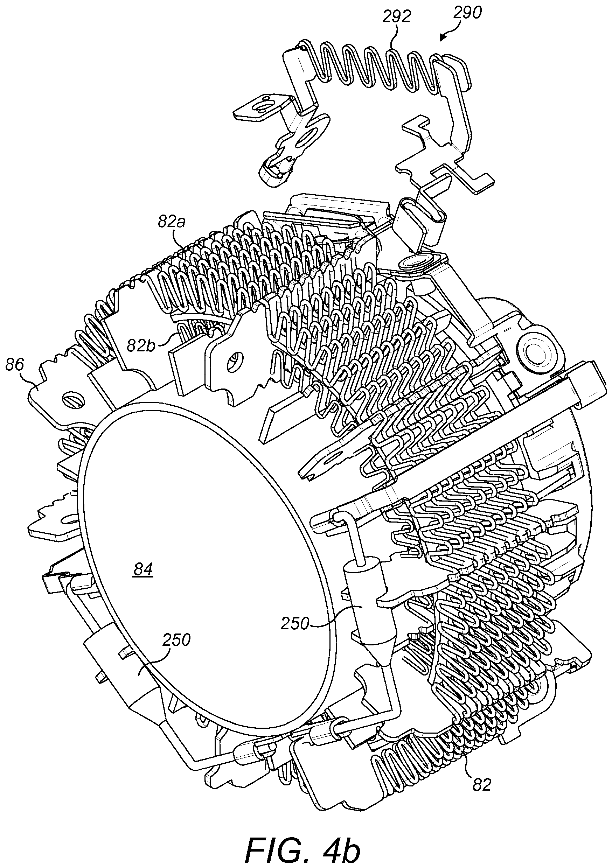

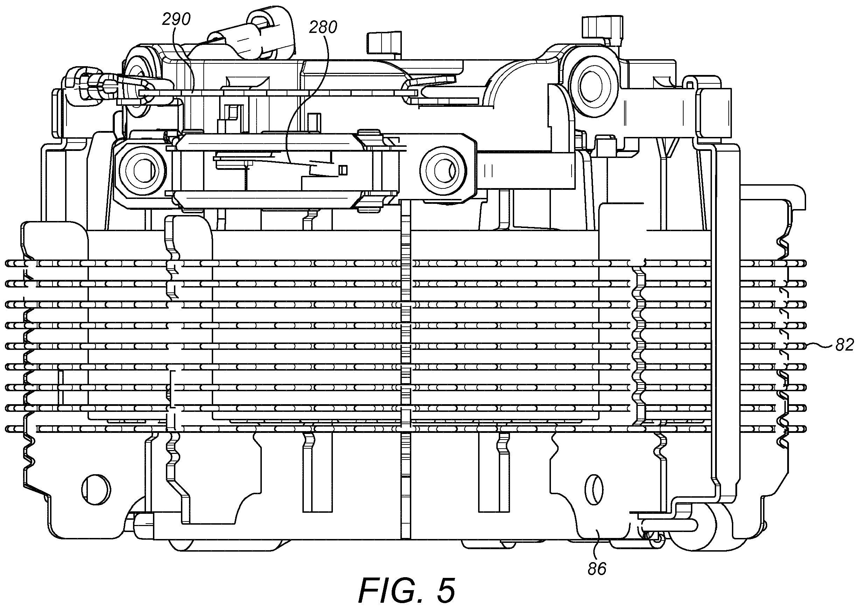

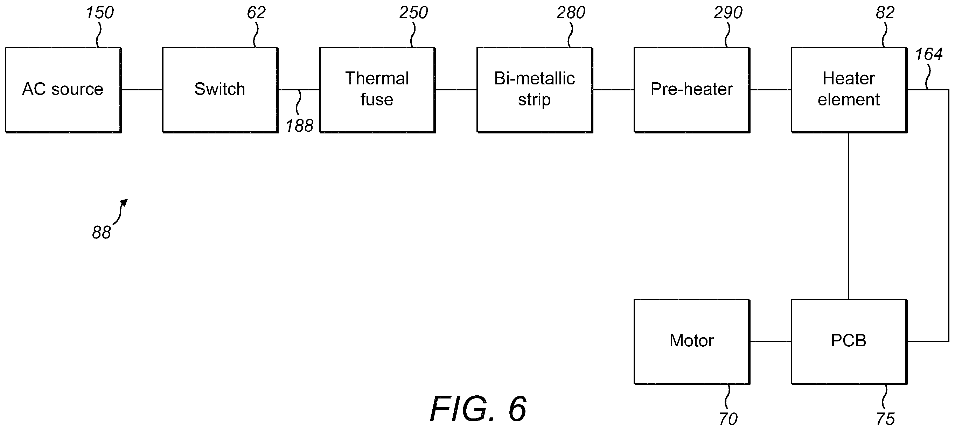

Referring now to Figures 3 to 6 in particular, the heater 80 comprises a wall 180 which surrounds the heater element 82 and extends around the external periphery of the heater element 82 providing some thermal protection to the outer wall 360 of the body 30 of the hairdryer 10. The heater element 82 is supported by a scaffold consisting of an inner tube 84 and a plurality of supporting struts 86 which extend radially between the inner tube 84 and the wall 180 and around which the heater element 82 is wound.

In order to prevent the heater element 82 from overheating, for example if the primary fluid inlet becomes blocked, a thermal safety device is provided. In this embodiment, the thermal safety device is a bi-metallic strip 280. When a pre-determined fluid temperature is reached the bi-metallic strip 280 bends breaking an electrical contact and the heater circuit 88. Once the fluid around the bi-metallic strip 280 cools sufficiently, the electrical contact is re-established and the heater circuit 88 is complete allowing the heater 80 to function again.

The bi-metallic strip 280 is upstream of the heater 80 so it does not sit within heated fluid. Thus, to enable the bi-metallic strip 280 to function effectively, a pre-heater 290 is provided. The pre-heater 290 forms part of the heater circuit 88 and is located fluidly upstream of the bi-metallic strip 280. The pre-heater 290 has a resistive element 292 which experiences the same current and fluid flow as the heater element 82 and is designed to simulate having the bi-metallic strip 280 within the heater 80.

The wall 180 which surrounds the heater element 82 and extends around the external periphery of the heater element 82 additionally extends over the pre-heater 290 to providing thermal protection to the outer wall 360 of the body 30 of the hairdryer 10 from heat generated by the pre-heater 290. In this embodiment the wall extension 182 is localised around the pre-heater 290.

When the hairdryer is switched on using the on/off button 62, current passes through a heater circuit 88. In this embodiment, a pair of thermal fuses 250 is provided as a part of the thermal safety for the hairdryer. The thermal fuses 250 render the appliance inoperable permanently if the fuse wire within melts. The thermal fuses 250 are positioned within the live wire 188 of the heater circuit 88 after the on/off button 62 but before the heater 80 and motor 70 so if there is a problem with the power supply to the hairdryer causing the thermal fuses 250 to activate, the heater 80 and motor 70 are not switched on. The bi-metallic strip is next in the heater circuit 88, again so if the bi-metallic strip bends and breaks the circuit, power to the heater 80 stops until a pre-determined lower temperature is reached. The pre-heater 290 follows the bi-metallic strip 280 in the heater circuit 88 and then the heater 80. The live wire 188 continues to the PCB and the motor 70.

In this embodiment, there are two heater elements 82a, 82b and a temperature setting button 64. Each heater element 82a, 82b is connected to the heater button 64 via a neutral wire 164, Triacs (not shown) on the PCB respond to a user pressing the temperature setting button 64 and regulate the power through the heater elements 82a, 82b to provide a range of different temperature settings for the hairdryer.

The bi-metallic strip 280 is positioned orthogonal to the fluid flow in the body 30, thus it is orthogonal to the longitudinal axis of the body A-A. This is advantageous as it maximises the exposure of the bi-metallic strip 280 to the fluid flowing through the primary fluid flow path 400. The pre-heater 290 is also positioned so the resistive element 292 is orthogonal to the fluid flow, ideally the resistive element 292 extends across the whole of the bi-metallic strip 280 as this maximises the effectiveness of this safety feature.

The pre-heater 290 has a resistive element 292 that extends partially around the primary fluid flow path 400 and is a single row of wire bent unto undulations. As an alternative, the wire could be formed into a coil. The resistive element 292 could form a ring that extends all the way round the flow path. The essential feature is not determined by the shape of the resistive element 292; it is that the bi-metallic strip 280 experiences either an equivalent temperature to if it were actually located within the heater 80 or that the pre-heater and the bi-metallic strip are attuned and both related to the heater temperature. Thus, the pre-heater 290 and the bi-metallic strip 280 may function at a different temperature to that of the heater 80.

The invention has been described in detail with respect to a hairdryer however, it is applicable to any appliance that draws in a fluid and directs the outflow of that fluid from the appliance.

The fluid that flows through the appliance is generally air, but may be a different combination of gases or gas and can include additives to improve performance of the appliance or the impact the appliance has on an object the output is directed at for example, hair and the styling of that hair.

The invention is not limited to the detailed description given above. Variations will be apparent to the person skilled in the art. In particular, the heater may be a conventional heater which is trapezoid in shape and wound around a frame formed into a cross shape. The heater could comprises more or less heater elements than has been herein described.

## Claims

1. A hair care appliance comprising a body, a fluid flow path extending from a fluid inlet into the appliance to a fluid outlet from the body, a heater comprising a heater element for heating fluid in the fluid flow path, a pre-heater located upstream of the heater and a thermal safety device positioned between the pre-heater and the heater and a wall extending around the periphery of the heater element.

2. An appliance according to claim 1, wherein the pre-heater comprises a resistive element.

3. An appliance according to claim 2, wherein, the pre-heater is electrically connected to the heater via a heater circuit.

4. An appliance according to any preceding claim, wherein the thermal safety device is electrically connected to the heater via the heater circuit.

5. An appliance according to any preceding claim, wherein when the appliance is activated, fluid flows from the fluid inlet through the pre-heater, past the thermal safety device, through the heater and on to the fluid outlet.

6. An appliance according to any preceding claim, wherein the body has a first end, a second end and a longitudinal axis A-A extending from the first end to the second end, wherein the fluid flow path extends along the longitudinal axis A-A.

7. An appliance according to claim 6, wherein the thermal safety device extends orthogonal to the longitudinal axis A-A of the body.

8. An appliance according to claim 6 or claim 7, wherein the pre-heater extends orthogonal to the longitudinal axis A-A of the body.

9. An appliance according to any of claims 6 to 8, wherein the pre-heater extends across the length of the thermal safety device.

10. An appliance according to any preceding claim, wherein the wall additionally extends around the periphery of the pre-heater.

11. An appliance according to any preceding claim, wherein the appliance is a hairdryer,
